# EUROPÄISCHE PATENTANMELDUNG

(11) **EP 4 592 372 A1**
(43) Veröffentlichungstag der Anmeldung: **30.07.2025**
(21) Anmeldenummer: 24154255.4
(22) Anmeldetag: 26.01.2024
(51) Int. Cl.: C09J 107/02, C09J 133/04

(54) **VERWENDUNG VON NATURKAUTSCHUKLATEX IN WASSERBASIERTEN BODENBELAGSKLEBSTOFFEN MIT HOHER SCHERSTEIFIGKEIT**

(71) Anmelder: Sika Technology AG, 6340 Baar (CH)
(72) Erfinder: BALKE, Lukas, 48653 Coesfeld (DE); BENIGHAUS, Tobias, 48165 Münster (DE)
(74) Vertreter: Sika Patent Attorneys

(57) **Zusammenfassung**

Die Erfindung betrifft einen wässrigen Dispersionsklebstoff, insbesondere Dispersionsbodenbelagsklebstoff, der eine Polyacrylat -Dispersion und einen Naturkautschuk-Latex umfasst.

Der Dispersionsklebstoff eignet sich insbesondere zum Verkleben von elastischen Bodenbelägen auf Untergründen. Der Dispersionsklebstoff zeigt eine hohe Schersteifigkeit und weist einen reduzierten CO₂-Fußabdruck auf.

## Beschreibung

### Technisches Gebiet

Die Erfindung betrifft wässrige Dispersionsklebstoffe, insbesondere wässrige Dispersionsklebstoffe für die Verlegung von elastischen Bodenbelägen.

### Stand der Technik

Für die Verlegung von elastischen Bodenbelägen sind derzeit Klebstoffe auf Wasserbasis Stand der Technik. Als Bindemittel in Bodenbelagsklebstoffen werden in der Regel wässrige Dispersionen von Polyacrylat-Copolymeren verwendet. Bei diesen Polymeren handelt es sich typischerweise um Copolymere aus Acrylestern, wie z.B. Butylacrylat, 2-Ethylhexylacrylat, Methacrylsäure.

Diese Polymere bieten zwei Vorteile. Sie weisen eine ausreichende Haftung auf einer breiten Palette von elastischen Bodenbelägen auf. Zudem stellen sie Klebrigkeit in halbnassem oder trockenem Zustand bereit.

Die Verwendung von Acryl-Copolymeren ist aber auch mit Nachteilen verbunden.

Zum einen sind Acrylat-Copolymere weich. Daher bleiben die wasserbasierten Bodenbelagsklebstoffe selbst nach dem Trocknen weich. Dies ist ein Nachteil bei Anwendungen, bei denen ein Klebstoff mit hoher Schersteifigkeit bzw. Schubsteifigkeit erforderlich ist. Solche Anwendungen sind z.B. Bodenbereiche mit hoher mechanischer Beanspruchung, z.B. in Geschäftslokalen, öffentlichen Bereichen, Krankenhäusern und Altenheimen, oder mit hoher Wärmeeinwirkung, z.B. im Bereich tiefer Fenster und in Wintergärten. Eine hohe Schersteifigkeit des Klebstoffs verhindert Bewegungen oder Fugen zwischen den Abschnitten des Bodenbelags.

Zum anderen liegt das Treibhauspotenzial (GWP) von Polyacrylaten bzw. Acrylat-Copolymeren als Chemikalie auf fossiler Basis bei etwa 5 kg CO₂-Äquivalent pro kg festem Polymer bzw. Copolymer. Bei diesem hohen GWP-Wert wird das GWP der endgültigen Klebstoffformulierung durch das GWP des Polyacrylats bestimmt.

### Darstellung der Erfindung

Die Aufgabe der Erfindung bestand in der Bereitstellung eines Klebstoffs, insbesondere eines Bodenbelagsklebstoffs, mit einer erhöhten Schersteifigkeit bei gleichzeitiger Verringerung des Treibhauspotentials im Vergleich zu herkömmlichen Polyacrylat-Klebstoffen.

Es wurde gefunden, dass diese Aufgabe durch den teilweisen Ersatz von Polyacrylaten in wässrigen Dispersionsklebstoffen durch Naturkautschuk gelöst werden konnte.

Dementsprechend betrifft die vorliegende Erfindung einen wässrigen Dispersionsklebstoff, insbesondere Dispersionsbodenbelagsklebstoff, der eine Polyacrylat-Dispersion und einen Naturkautschuk-Latex umfasst.

Es wurde überraschenderweise festgestellt, dass die Zugabe eines Naturkautschuk-Latex die Köhasionskraft und Schersteifigkeit eines wässrigen Dispersionsklebstoffs auf Basis von Polyacrylaten erhöht. Die Schersteifigkeit eines Klebstoffs wird auch als Schubsteifigkeit bezeichnet.

Da Naturkautschuk einen GWP von nur etwa 1,2 kg COz-Äquivalenten pro kg festem Naturkautschuk aufweist, wird das GWP bzw. der COz-Fußabdruck des Klebstoffs deutlich reduziert, indem das Polyacrylat teilweise durch Naturkautschuk-Latex ersetzt wird. Dadurch wird ein umweltschonenderer und nachhaltigerer Klebstoff bereitgestellt.

Insgesamt zeichnet sich der erfindungsgemäße wässrige Dispersionsklebstoff durch eine hohe Kohäsionskraft und Schersteifigkeit sowie ein reduziertes GWP bzw. einen reduzierten COz-Fußabdruck auf. Ein weiterer Vorteil ist eine hohe Dimensionsstabilität bei erhöhten Temperaturen.

### Weg zur Ausführung der Erfindung

Die Erfindung betrifft einen wässrigen Dispersionsklebstoff, insbesondere Dispersionsbodenbelagsklebstoff, der eine Polyacrylat-Dispersion und einen Naturkautschuk-Latex umfasst.

Der erfindungsgemäße wässrige Dispersionsklebstoff ist bevorzugt ein wässriger Dispersionsbodenbelagsklebstoff. Ein Bodenbelagsklebstoff ist ein Klebstoff zum Verkleben von Bodenbelägen auf Untergründen zur Herstellung von Böden, insbesondere Fußböden.

Wässrige Dispersionsklebstoffe sind dem Fachmann bekannt und in großer Zahl im Handel erhältlich. Ein gebräuchlicher wässriger Dispersionsklebstoff ist ein wässriger Dispersionsklebstoff auf Basis von Polyacrylaten als Bindemittel. Der erfindungsgemäße wässrige Dispersionsklebstoff kann ein solcher Polyacrylat-Dispersionsklebstoff sein, bei dem ein Teil des Polyacrylats bzw. der Polyacrylat-Dispersion durch Naturkautschuk bzw. einer Naturkautschuk-Latex ersetzt wird.

Das Gewichtsverhältnis von Polyacrylat zu Naturkautschuk in dem erfindungsgemäßen wässrigen Dispersionsklebstoff kann z.B. im Bereich von 90 : 10 bis 20 : 80, bevorzugt 70 : 30 bis 30 : 70, bevorzugter es : 35 bis 35 : 65 liegen. Das Gewichtsverhältnis bezieht sich auf den jeweiligen Feststoffgehalt von Polyacrylat und Naturkautschuk.

Mit steigendem Anteil an Naturkautschuk steigt die Festigkeit des ausgehärteten Klebstoffs. Das Gewichtsverhältnis von Polyacrylat zu Naturkautschuk ist dabei bevorzugt höchstens 90 : 10, da bei Anteilen von Naturkautschuk von < 10 % der Effekt nicht so stark ausgeprägt ist. Der Naturlatex zeigt bei polaren Bodenbelägen, wie z.B. PVC-Bodenbelägen, nur beschränkte Haftungseigenschaften. Insbesondere in diesen Fällen ist es daher bevorzugt, dass der Naturkautschuk-Anteil nicht mehr als 70% beträgt (Gewichtsverhältnis von Polyacrylat zu Naturkautschuk mindestens 30 : 70).

Sehr gute Eigenschaften wurden bei einem erfindungsgemäßen wässrigen Dispersionsklebstoff gefunden, in dem das Gewichtsverhältnis von Polyacrylat zu Naturkautschuk in dem erfindungsgemäßen wässrigen Dispersionsklebstoff im Bereich von 35 : 65 bis 65 : 35, insbesondere etwa 50 : 50, liegt.

Das Polyacrylat und der Naturkautschuk dienen als Bindemittel des Klebstoffs. In einer bevorzugten Ausführungsform beträgt der Anteil an Polyacrylat und Naturkautschuk zusammen 5 bis 100 Gew.-%, bevorzugt 10 bis 70 Gew.-%, bevorzugter 15 bis 60 Gew.-%, bezogen auf den Feststoffgehalt des wässrigen Dispersionsklebstoffs.

Der Feststoffgehalt des erfindungsgemäßen wässrigen Dispersionsklebstoffs kann in den üblichen Bereichen für wässrige Dispersionsklebstoffe liegen. Der erfindungsgemäße wässrige Dispersionsklebstoff kann z.B. einen Feststoffgehalt von 30 bis 80 Gew.-%, bevorzugt 40 bis 80 Gew.-%, bevorzugter 50 bis 75 Gew.-%, bezogen auf das Gesamtgewicht des wässrigen Dispersionsklebstoffs, aufweisen.

Der erfindungsgemäße wässrige Dispersionsklebstoff enthält Wasser, das als Dispersionsmittel dient. Gegebenenfalls können zusätzlich geringe Mengen an einem oder mehreren organischen Lösungsmitteln enthalten sein, z.B. in einer Menge von nicht mehr als 5 Gew.-%, bevorzugter nicht mehr als 1 Gew.-%, z.B. mindestens 0,1 Gew.-%, bezogen auf das Gesamtgewicht des wässrigen Dispersionsklebstoffs, das ist aber nicht bevorzugt. Der erfindungsgemäße wässrige Dispersionsklebstoff ist bevorzugt frei von organischen Lösungsmitteln.

Der erfindungsgemäße wässrige Dispersionsklebstoff kann ferner ein oder mehrere Additive umfassen. Es kann sich um Additive handeln, die für wässrige Dispersionsklebstoffe üblich sind. Beispiele für optionale Additive sind Weichmacher, Füllstoffe, Klebrigmacher, Dispergiermittel, Naturharze und deren Ester, Konservierungsmittel, Biozide, Alterungsschutzmittel, Lichtschutzmittel, Entschäumungsmittel, Verdicker oder eine Kombination davon. Organische Lösungsmittel als mögliche Additive wurden vorstehend diskutiert.

Beispiele für Weichmacher sind Phthalat-Weichmacher, wie Dibutylphthalate, Cyclohexandicarbonsäureester (DINCH), Polypropylenglycole und deren Ester oder Adipatweichmacher. Beispiele für Füllstoffe sind Siliziumdioxid, Kieselsäuren, wie pyrogene und gefällte Kieselsäuren, Calciumcarbonat, Kreiden, Leichtspat und Schwerspat, gemahlenes Glas, geschäumtes Glas, Hohlglaskugeln, sowie expandierte Perlite.

Der erfindungsgemäße wässrige Dispersionsklebstoff enthält eine Polyacrylat-Dispersion. Solche Polyacrylat-Dispersionen werden auch als Acrylat-Dispersionen bezeichnet. Bei der Polyacrylat-Dispersion kann es sich um übliche wässrige Dispersionen von Poly(meth)acrylaten handeln. Der Begriff "(Meth)acrylate" umfasst sowohl Acrylate wie auch Methacrylate. Das oder die Poly(meth)acrylat(e) der Polyacrylat-Dispersion können (Meth)acrylat-Homopolymere und/oder (Meth)acrylat-Copolymere sein.

Das Polyacrylat-Homopolymer ist ein Polyacrylat von einem Acrylat-Monomer ausgewählt aus Acrylsäureestern oder Methacrylsäureestern. Das Polyacrylat-Copolymer ist ein Polyacrylat von mindestens einem Acrylat-Monomer ausgewählt aus Acrylsäureestern und/oder Methacrylsäureestern in Kombination mit mindestens einem davon verschiedenen Acrylat-Monomer ausgewählt aus Acrylsäureestern und Methacrylsäureestern und/oder einem oder mehreren weiteren Vinylmonomeren. Das Polyacrylat ist typischerweise ein Acrylat-Copolymer, insbesondere ein Copolymer von Acrylestern von mindestens einem Acrylester in Kombination mit mindestens einem Methacrylester und/oder mindestens einem weiteren Vinylmonomer.

Die Acrylat-Polymere, insbesondere Acrylat-Copolymere, sind aus einem oder mehreren Monomeren ausgewählt aus Acrylsäureestern und/oder Methacrylsäureestern sowie gegebenenfalls einem oder mehreren weiteren Vinylmonomeren gebildet. Die weiteren Vinylmonomere schließen Ethylen ein und sind von Acrylsäureestern und/oder Methacrylsäureestern verschieden, worunter auch Acrylsäureester und/oder Methacrylsäureester mit mindestens einer zusätzlichen funktionellen Gruppe fallen.

Beispiele für Acrylsäureester und/oder Methacrylsäureester sind Methylacrylat, Ethylacrylat, Butylacrylat, 2-Ethylhexylacrylat, Ethylmethacrylat, Butylmethacrylat und 2-Ethylhexylmethacrylat, wobei Butylacrylat und 2-Ethylhexylacrylat bevorzugt sind. Die Acrylat-Copolymere basieren meist auf einem oder mehreren Acrylsäureestern, wobei Methacrylsäureester als Comonomere zur Einstellung der Eigenschaften, wie der Filmhärte, eingesetzt werden können.

Weitere Vinylmonomere als optionale Comonomere können dazu dienen, funktionelle Gruppen, wie z.B. Carboxyl-, Amid-, Amino-, Methylol-, oder Hydroxylgruppen, in das Acrylat-Copolymer einzubauen. Beispiele für solche Vinylmonomere sind Acrylsäure, Methacrylsäure, Acrylamid, Methacrylamid, und Acrylsäureester oder Methacrylsäureester mit funktionellen Gruppen, wie z.B. 2-Hydroxyethylacrylat, Butandiolmonoacrylat oder N,N-Dimethylaminoethylacrylat.

Weitere Vinylmonomere als optionale Comonomere, sind beispielsweise Vinylester von Carbonsäuren mit bis zu 20 C-Atomen, vinylaromatische Verbindungen mit bis zu 20 C-Atomen, ethylenisch ungesättigte Nitrile, Vinylhalogenide, nichtaromatische Kohlenwasserstoffe mit mindestens zwei konjugierten Doppelbindungen oder Mischungen aus diesen Monomeren., insbesondere Ethylen, Vinylacetat oder Styrol. So kann es sich bei dem Acrylat-Copolymer auch z.B. um ein Styrol-Acrylat-Copolymer handeln.

Typische Acrylat-Copolymere für die Polyacrylatdispersion enthalten z.B. Monomereinheiten auf Basis von Butylacrylat, 2-Ethylhexylacrylat und/oder Methacrylsäure.

Geeignete Polyacrylatdispersionen und deren Herstellungsverfahren sind z.B. in EP 0490191 A2, DE 19801892 A1, und in EP 0620243 beschrieben.

Geeignete dispergierbare Acrylat-Copolymere für die Polyacrylatdispersion oder gebrauchsfertige wässrige Dispersionen davon sind im Handel erhältlich, z. B. von BASF unter dem Handelsnamen Acronal^{®}, von Dow unter dem Handelsnamen Primal^{®}, von Synthomer unter den Handelsnamen Plextol^{®} und Revacry^{l®} oder von Wacker unter dem Handelsnamen Vinnapas^{®}.

Die zur Herstellung des erfindungsgemäßen wässrigen Dispersionsklebstoffs eingesetzten Polyacrylat-Dispersionen weisen zweckmäßigerweise einen Feststoffgehalt von 20 bis 80 Gew.-%, insbesondere 29 bis 75 Gew.-%, bevorzugt 45 bis 70 Gew.-%, auf.

Der erfindungsgemäße wässrige Dispersionsklebstoff enthält einen Naturkautschuk-Latex. Es kann sich um einen üblichen Naturkautschuk-Latex handeln, wie er im Handel erhältlich ist. Bevorzugt handelt es sich um ein Naturkautschuk-Latexkonzentrat, insbesondere stabilisiertes Naturkautschuk-Latexkonzentrat, die als Handelsform für Naturkautschuk üblich ist. Solche Naturkautschuk-Latices bzw. Naturkautschuk-Latexkonzentrate können gegebenenfalls je nach Aufarbeitung kleinere Mengen anderer Bestandteile natürlichen Ursprungs enthalten, wie z.B. Harze, Eiweiße oder Mineralstoffe.

Der Naturkautschuk-Latex ist in der Regel ein stabilisierter Naturkautschuk-Latex. Die Stabilisierung dient dazu, eine Koagulation des Naturkautschuks zu vermeiden. Zur Stabilisierung der Naturkautschuk-Latex wird in der Regel Ammoniak als Stabilisierungsmittel zugesetzt. Andere geeignete Stabilisierungsmittel sind z.B. Natronlauge, Pentachlorphenol-Natrium, Borsäure, Zinkdimethyldithiocarbamat oder Thiuramdisulfide.

Der Naturkautschuk-Latex ist bevorzugt ein Naturkautschuk-Latex, der nicht durch Ammoniak stabilisiert ist. Bevorzugt wird ein stabilisierter Naturkautschuk-Latex eingesetzt, der mit einem von Ammoniak verschiedenen Stabilisierungsmittel stabilisiert ist, wie z.B. die vorstehend genannten.

Der zur Herstellung des erfindungsgemäßen wässrigen Dispersionsklebstoffs eingesetzten Naturkautschuk-Latex weist zweckmäßigerweise einen Feststoffgehalt von größer 50 Gew.-% auf. Dabei handelt es sich bevorzugt um sogenannte zentrifugierte Naturkautschuk-Latices.

Zur Herstellung des erfindungsgemäßen wässrigen Dispersionsklebstoffs werden die Polyacrylat-Dispersion und der Naturkautschuk-Latex miteinander vermischt und gegebenenfalls ein oder mehrere Additive zugegeben. Die Reihenfolge der Zugabe der Komponenten ist beliebig.

Die Erfindung betrifft auch die Verwendung des erfindungsgemäßen wässrigen Dispersionsklebstoffs wie vorstehend beschrieben als Bodenbelagsklebstoff. Ein Bodenbelagsklebstoff ist ein Klebstoff zum Verkleben von Bodenbelägen auf Untergründen zur Herstellung von Böden, insbesondere Fußböden.

In einer bevorzugten Ausführungsform wird der erfindungsgemäße wässrige Dispersionsklebstoff zum Verkleben von elastischen Bodenbelägen auf einem Untergrund verwendet. Der elastische Bodenbelag kann in Form einer Bahn oder von Einzelelementen, wie z.B. Fliesen, vorliegen,

Der elastische Bodenbelag kann z.B. ein PVC-Belag, auch als Vinylbelag bezeichnet, ein Belag aus geschäumtem Vinyl (CV), ein Gummibelag, ein Textilbelag, ein Vlies, Linoleum, ein Korkbelag, ein Belag aus Polyurethan oder ein Belag aus Polyolefin sein.

Beläge, insbesondere Textilbeläge, können eine Rückenausrüstung aufweisen, z.B. um die Festigkeit zu erreichen bzw. zu erhöhen. Textilbeläge können aus Naturfaser oder synthetischer Faser sein. Beispiele für Textilbeläge sind Teppiche, Teppichböden, Teppichfliesen, Webwaren oder auch Vliese.

Da der erfindungsgemäße Klebstoff eine hohe Schersteifigkeit bzw. Schubsteifigkeit zeigt, eignet er sich insbesondere zum Verkleben von Bodenbelägen, insbesondere elastischen Bodenbelägen, für Böden, insbesondere Fußböden, mit hoher mechanischer Beanspruchung und/oder hoher Wärmeeinwirkung. Beispiele für solche Böden sind Böden bzw. Fußböden für Geschäftslokale, öffentliche Bereiche, Krankenhäuser, Altenheime, Sportplätze, Sporthallen, z.B. Tennisplätze oder -hallen oder Laufbahnen, an tiefe Fenster angrenzende Fußböden und Wintergärten. Der Boden kann im Innen- oder Außenbereich liegen. In der Regel befindet sich der Boden aber im Innenbereich.

Der Untergrund, auf den der Bodenbelag, insbesondere der elastische Bodenbelag, mittels des erfindungsgemäßen wässrigen Dispersionsklebstoffs aufgeklebt werden kann, kann jeder übliche Untergrund sein. Beispiele für einen solchen Untergrund sind zementöse Untergründe, Estriche, Beton, Holz oder alte Bodenbeläge.

Die Erfindung betrifft ferner ein Verfahren zum Verlegen bzw. Verkleben eines Bodenbelags, bevorzugt eines elastischen Bodenbelags, auf einen Untergrund, umfassend die folgenden Schritte:
Aufbringen eines erfindungsgemäßen wässrigen Dispersionsklebstoffs wie vorstehend beschrieben auf den Untergrund,
Platzieren des Bodenbelags auf den aufgebrachten Dispersionsklebstoff und Härten des Dispersionsklebstoffs.

Die vorstehenden Ausführungen zum erfindungsgemäßen Dispersionsklebstoff und zur erfindungsgemäßen Verwendung einschließlich der Angaben zum Bodenbelag bzw. elastischen Bodenbelag und zum Untergrund gelten in gleicher Weise für das erfindungsgemäße Verfahren, so dass darauf verwiesen wird.

Der erfindungsgemäße wässrige Dispersionsklebstoff kann durch jedes übliche Auftragverfahren auf den Untergrund aufgebracht werden, z.B. durch Aufstreichen, Aufrollen oder Spachteln. Bevorzugt wird der wässrige Dispersionsklebstoff durch Spachteln, besonders bevorzugt mit einem Zahnspachtel, auf den Untergrund aufgebracht. Der Untergrund kann vor dem Auftrag gegebenenfalls vorbehandelt werden, z.B. durch eine Glättung oder durch Aufbringen eines Haftvermittlers.

Die zweckmäßige Auftragsmenge des wässrigen Dispersionsklebstoffs kann insbesondere in Abhängigkeit von dem Feststoffgehalt des Dispersionsklebstoffs und der Art des Untergrunds und des Bodenbelags in weiten Bereichen variieren. Die Auftragsmenge des wässrigen Dispersionsklebstoffs kann z.B. im Bereich von 150 bis 600 g/m², bevorzugt 200 bis 500 g/m², liegen.

Im Allgemeinen kann die Einsatztemperatur für das erfindungsgemäße Verfahren bei Raumtemperatur liegen, z.B. im Bereich von 5 bis 35°C.

Nach dem Auftrag kann der Klebstoff zweckmäßigerweise abgelüftet werden. Die Ablüftzeit kann z.B. im Bereich von 5 min bis 2 h liegen.

Anschließend wird der Bodenbelag auf den aufgebrachten Dispersionsklebstoff platziert. Die Platzierung kann in den nassen oder trockenen Dispersionsklebstoff erfolgen. Der trockene Dispersionsklebstoff darf aber noch nicht vollständig ausgehärtet sein. Nach dem Auflegen des Belags ist ein gegebenenfalls mehrmaliges Andrücken des platzierten Bodenbelags zweckmäßig, z.B. mit einem Belagsroller.

Nach der Platzierung des Bodenbelags lässt man den Dispersionsklebstoff aushärten. Der Dispersionsklebstoff härtet mit der Zeit von selbst aus.

Die Erfindung betrifft ferner eine Bodenkonstruktion, umfassend einen Untergrund und einen Bodenbelag, bevorzugt elastischen Bodenbelag, wobei der Bodenbelag mittels eines erfindungsgemäßen wässrigen Dispersionsklebstoffs wie vorstehend beschrieben auf den Untergrund aufgeklebt ist.

Die vorstehenden Ausführungen zum erfindungsgemäßen Dispersionsklebstoff, zur erfindungsgemäßen Verwendung und zum erfindungsgemäßen Verfahren einschließlich der Angaben zum Bodenbelag bzw. elastischen Bodenbelag und zum Untergrund gelten in gleicher Weise für die erfindungsgemäße Bodenkonstruktion, so dass darauf verwiesen wird. Die erfindungsgemäße Bodenkonstruktion ist bevorzugt durch das erfindungsgemäße Verfahren erhältlich.

Die Bodenkonstruktion eignet sich als Boden oder Fußboden aller Art, insbesondere für Böden oder Fußböden mit hoher mechanischer Beanspruchung und/oder hoher Wärmeeinwirkung, wie z.B. Böden bzw. Fußböden für Geschäfte, öffentliche Bereiche, Krankenhäuser, Altenheime, Sportplätze, Sporthallen, z.B. Tennisplätze oder -hallen oder Laufbahnen, an tiefe Fenster angrenzende Fußböden und Wintergärten. Die Bodenkonstruktion kann im Innen- oder Außenbereich liegen, ist aber bevorzugt eine Bodenkonstruktion im Innenbereich.

Im Folgenden werden zur weiteren Erläuterung der Erfindung Ausführungsbeispiele beschrieben, die die Erfindung aber in keiner Weise einschränken sollen.

### Beispiele

Im Folgenden werden erfindungsgemässe Beispiele 1-5 und Vergleichsbeispiel A dargestellt, welche die Effekte der Erfindung illustrieren sollen.

Es wurden wässrige Dispersionsklebstoffe mit den nachstehend in Tabelle 1 angegebenen Materialien hergestellt.

**Tabelle 1: Verwendete Rohstoffe.**

| **Material** | **Beschreibung** |
|---|---|
| Polyacrylat-Bindemittel | wässrige Polyacrylat-Dispersion (Feststoffgehalt 60%), Polyacrylat: Acrylat-Copolymer aus Acrylat, Vinylacetat und Ethylen |
| Wasser | Wasser |
| Konservierungsmittel 1 | stabilisierte 1,5% Lösung von 5-Chloro-2-methyl-2H-isothiazol-3- on (CMIT) / 2-Methyl-2H-isothiazol-3- on (MIT) |
| Bakterizid | Bronopol- Zubereitung; Lösung auf Basis von Glykol |
| Entschäumer | silikonhaltiger Entschäumer |
| Dispergiermittel | polymeres Dispergiermittel auf Basis von Acrylsäure-Natriumsalz |
| NaOH | Natronlauge 10% |
| Sorbitol | Sorbitol-Pulver (Feuchthaltemittel) |
| Füllstoff 1 | Calciumcarbonat (Pulver); gemahlener natürlicher Marmor |
| Füllstoff 2 | Calciumcarbonat (Pulver) ; gemahlener natürlicher Kalkstein |
| Naturharzester | Triethylenglycolester von Kolophonium |
| Konservierungsmittel 2 | wässrige Formulierung von 1,2-benzisothiazolin-3-on (BIT) |
| Verdicker | wässriger Acrylverdicker (Festoffgehalt 28%) |
| Naturkautschuk-Bindemittel | Ammoniakfreier Naturkautschuk-Latex (Feststoffgehalt 60%) |

Die eingesetzten Materialien und deren Mengen für die Beispiele 1 bis 5 und das Vergleichsbeispiel A sind in der nachfolgenden Tabelle 4 wiedergegeben. Die Materialien wurden auf übliche Weise vermischt, um die wässrigen Dispersionsklebstoffe zu erhalten.

Die Beispiele 1 bis 5 enthielten als Bindemittel eine Polyacrylat-Dispersion und einen Naturkautschuk-Latex, während im Vergleichsbeispiel A nur die Polyacrylat-Dispersion als Bindemittel eingesetzt wurde. Die Anteile an Polyacrylat und Naturkautschuk sind in der Tabelle 2 zusammengestellt. Die Anteile beziehen sich auf die Gesamtmenge an Bindemittel (Polyacrylat-Dispersion + Naturkautschuk-Latex), bezogen auf den Feststoffgehalt.

**Tabelle 2: Anteile an Polyacrylat und Naturkautschuk**

| **Vergleichsbeispiel / Beispiele** | **A** | **1** | **2** | **3** | **4** | **5** |
|---|---|---|---|---|---|---|
| Anteil Polyacrylat im Bindemittel [%] | 100 | 75 | 50 | 40 | 30 | 20 |
| Anteil Naturkautschuk im Bindemittel [%] | 0 | 25 | 50 | 60 | 70 | 80 |

### Bodenkonstruktion

Es wurden Bodenkonstruktionen hergestellt, indem auf einen Untergrund mithilfe der hergestellten wässrigen Dispersionsklebstoffen, die in den Beispielen 1 bis 5 und dem Vergleichsbeispiel A hergestellt wurden, ein Bodenbelag verlegt wurde.

Für die Bestimmung der Schäl- und Scherfestigkeit wurden PVC-Streifen gemäß der DIN EN ISO 22631 bzw. 22632 mit den wässrigen Dispersionsklebstoffen auf Faserzementplatten verklebt. Die Schäl- und Scherfestigkeit wurden nach einer Aushärtezeit von 28 Tagen bestimmt.

Für die Bestimmung der Dimensionsstabilität (Maßänderung) bei 50 °C wurden Platten aus Porenbeton mit den Maßen 25 × 25 cm² und einer Dicke von min. 3 cm mit einer Dispersiongrundierung beschichtet (SCHÖNOX KH FIX). Nach Trocknung der Grundierung wurde die Oberfläche des Porenbeton mit einer selbstverlaufenden Gipsspachtelmasse (SCHÖNOX AM) in einer Stärke von min. 2 und max. 10 mm beschichtet. Nach der Trocknung der Gipsspachtelmasse (24 h bei SCHÖNOX AM) wurde ein PVC-Belag mit den Maßen 20 × 20 cm² mit den wässrigen Dispersionsklebstoffen auf der Oberfläche der Gipsspachtelmasse verklebt.

### Messungen

Die Eigenschaften der hergestellten Bodenkonstruktionen wurden mithilfe der folgenden Messmethoden untersucht.

**Tabelle 3: Messmethoden.**

| | |
|---|---|
| Schälfestigkeit: | Die Schälfestigkeit wurde in N/mm gemäß EN ISO 22631 bestimmt. |
| Scherfestigkeit: | Die Scherfestigkeit wurde in N/mm² gemäß EN ISO 22632 bestimmt. |
| Maßänderung bei 50°C: | Die Maßänderung bei 50°C wurde in % gemäß EN 14565 bestimmt. |

Die Messergebnisse sind ebenfalls in der Tabelle 4 wiedergegeben.

**Tabelle 4: Zusammensetzungen und Messergebnisse.**

| **Vergleichsbsp./Beispiele** | **A** | **1** | **2** | **3** | **4** | **5** |
|---|---|---|---|---|---|---|
| ***Zusammensetzung*** | | | | | | |
| Polyacrylat-Bindemittel | 43,80% | 32,85% | 21,90% | 17,52% | 13,14% | 8,76% |
| Wasser | 7,08% | 7,08% | 7,08% | 7,08% | 7,08% | 7,08% |
| Konservierungsmittel 1 | 0,06% | 0,06% | 0,06% | 0,06% | 0,06% | 0,06% |
| Bakterizid | 0,18% | 0,18% | 0,18% | 0,18% | 0,18% | 0,18% |
| Entschäumer | 0,19% | 0,19% | 0,19% | 0,19% | 0,19% | 0,19% |
| Dispergiermittel | 0,48% | 0,48% | 0,48% | 0,48% | 0,48% | 0,48% |
| NaOH | 1,94% | 1,94% | 1,94% | 1,94% | 1,94% | 1,94% |
| Sorbitol | 0,97% | 0,97% | 0,97% | 0,97% | 0,97% | 0,97% |
| Füllstoff 1 | 13,57% | 13,57% | 13,57% | 13,57% | 13,57% | 13,57% |
| Füllstoff 2 | 17,55% | 17,55% | 17,55% | 17,55% | 17,55% | 17,55% |
| Naturharzester | 13,77% | 13,77% | 13,77% | 13,77% | 13,77% | 13,77% |
| Konservierungsmittel 2 | 0,25% | 0,25% | 0,25% | 0,25% | 0,25% | 0,25% |
| Verdicker | 0,17% | 0,17% | 0,17% | 0,17% | 0,17% | 0,17% |
| Naturkautschuk-Bindemittel | - | 10,95% | 21,90% | 26,28% | 30,66% | 35,04% |

| ***Messergebnisse*** | | | | | | |
|---|---|---|---|---|---|---|
| Schälfestigkeit [N/mm] | 1,29 | 1,59 | 1,56 | 1,44 | 1,35 | 0,74 |
| Scherfestigkeit [N/mm²] | 0,88 | 1,05 | 1,29 | 1,06 | 0,99 | 0,8 |
| Maßänderung bei 50°C [%] | 0,29 | 0,205 | 0,175 | 0,175 | 0,18 | 0,19 |

Die Daten in Tabelle 4 zeigen, dass die erfindungsgemässen Beispiele eine deutlich bessere Dimensionsstabilität (geringere Maßänderung) bei 50°C aufweisen als das Referenzbeispiel A.

Die bevorzugten Ausführungsformen (Beispiele 1-4) weisen zudem eine signifikant verbesserte Schäl- und Scherfestigkeit auf.

## Patentansprüche

1. Wässriger Dispersionsklebstoff, insbesondere Dispersionsbodenbelagsklebstoff, umfassend eine Polyacrylat-Dispersion und einen Naturkautschuk-Latex.

2. Wässriger Dispersionsklebstoff nach Anspruch 1, wobei das Gewichtsverhältnis von Polyacrylat zu Naturkautschuk im Bereich von 90:10 bis 20 : 80, bevorzugt 70 : 30 bis 30 : 70, bevorzugter es : 35 bis 35 : 65, liegt.

3. Wässriger Dispersionsklebstoff nach einem der vorhergehenden Ansprüche, wobei der Anteil an Polyacrylat und Naturkautschuk zusammen 5 bis 100 Gew.-%, bevorzugt 10 bis 70 Gew.-%, bevorzugter 15 bis 60 Gew.-%, bezogen auf den Feststoffgehalt des wässrigen Dispersionsklebstoffs, beträgt.

4. Wässriger Dispersionsklebstoff nach einem der vorhergehenden Ansprüche, wobei der wässrige Dispersionsklebstoff einen Feststoffgehalt von 30 bis 80 Gew.-%, bevorzugt 40 bis 80 Gew.-%, bevorzugter 50 bis 75 Gew.-%, bezogen auf das Gesamtgewicht des wässrigen Dispersionsklebstoffs, aufweist.

5. Wässriger Dispersionsklebstoff nach einem der vorhergehenden Ansprüche, wobei das oder die Polyacrylate der Polyacrylat-Dispersion Acrylat-Homopolymere, Acrylat-Copolymere oder Mischungen davon sind.

6. Wässriger Dispersionsklebstoff nach einem der vorhergehenden Ansprüche, ferner umfassend ein oder mehrere Additive, bevorzugt ausgewählt aus Weichmachern, Füllstoffen, Klebrigmachern, Dispergiermitteln, Naturharzen und deren Estern, organischen Lösungsmitteln, Konservierungsmitteln, Bioziden, Alterungsschutzmitteln, Lichtschutzmitteln, Entschäumungsmitteln, Verdickern oder einer Kombination davon.

7. Wässriger Dispersionsklebstoff nach einem der vorhergehenden Ansprüche, wobei der Naturkautschuk-Latex nicht durch Ammoniak stabilisiert ist.

8. Verwendung eines wässrigen Dispersionsklebstoffs nach einem der Ansprüche 1 bis 7 als Bodenbelagsklebstoff.

9. Verwendung nach Anspruch 8 zum Verkleben von elastischen Bodenbelägen auf einem Untergrund, wobei der elastische Bodenbelag bevorzugt aus PVC, geschäumtem Vinyl (CV), Gummi, Textil, Vlies, Linoleum, Kork, Polyurethan oder Polyolefin ist.

10. Verwendung nach Anspruch 8 oder 9 für einen Untergrund, der aus zementösen Untergründen, Estrichen, Bodenspachtelmassen, Beton, Holz oder alten Bodenbelägen ausgewählt ist.

11. Verfahren zum Verlegen eines Bodenbelags, bevorzugt eines elastischen Bodenbelags, auf einen Untergrund, umfassend die folgenden Schritte:
Aufbringen eines wässrigen Dispersionsklebstoffs nach einem der Ansprüche 1 bis 7 auf den Untergrund,
Platzieren des Bodenbelags auf den aufgebrachten Dispersionsklebstoff und
Härten des Dispersionsklebstoffs.

12. Verfahren nach Anspruch 11, wobei
der Bodenbelag ein elastischer Bodenbelag ausgewählt aus PVC, geschäumtem Vinyl (CV), Gummi, Textil, Linoleum, Kork, Polyurethan oder Polyolefin ist, und/oder
der Untergrund aus zementösen Untergründen, Estrichen, Bodenspachtelmassen, Beton, Holz oder alten Bodenbelägen ausgewählt ist.

13. Bodenkonstruktion, umfassend einen Untergrund und einen Bodenbelag, bevorzugt elastischen Bodenbelag, wobei der Bodenbelag mittels eines wässrigen Dispersionsklebstoffs nach einem der Ansprüche 1 bis 7 auf den Untergrund aufgeklebt ist.

14. Bodenkonstruktion nach Anspruch 13, wobei
der Bodenbelag ein elastischer Bodenbelag ausgewählt aus PVC, geschäumtem Vinyl (CV), Gummi, Textil, Linoleum, Kork, Polyurethan oder Polyolefin ist, und/oder
der Untergrund aus zementösen Untergründen, Estrichen, Beton, Holz oder alten Bodenbelägen ausgewählt ist.
